# FASCICULE DE BREVET EUROPEEN

(11) **EP 1 419 925 B1**
(45) Date de publication et mention de la délivrance du brevet: **26.04.2006**
(21) Numéro de dépôt: 03292732.9
(22) Date de dépôt: 31.10.2003
(51) Int. Cl.: B60L 5/20

(54) **Pantographe de vehicule ferroviaire**
Scherenstromabnehmer für Schienenfahrzeug
Pantograph for railway vehicle

(30) Priorité: 15.11.2002 FR 0214340
(43) Date de publication de la demande: 19.05.2004
(73) Titulaire: FAIVELEY TRANSPORT, 93200 Saint-Denis (FR)
(72) Inventeur: Branvillain, Gérard, 37270 Veretz (FR)
(74) Mandataire: Geismar, Thierry

(56) Documents cités:
- FR-A- 2 796 895
- JP-A- 11 069 502

## Description

La présente invention concerne un pantographe de véhicule ferroviaire, et plus particulièrement un tel pantographe muni d'un dispositif de captage principal destiné à l'alimentation électrique du véhicule en marche.

Ces pantographes sont parfaitement connus et comprennent un archet muni d'au moins une bande de captage électriquement conductrice, cet archet étant monté sur une structure de support susceptible de se déployer vers le haut de manière à amener l'archet au contact de la caténaire, à partir d'une position de non utilisation au voisinage du toit du véhicule. La structure de support est généralement agencée de manière que l'archet exerce sensiblement toujours la même pression sur la caténaire quelle que soit la hauteur de cette dernière.

Jusqu'à présent, il n'a pas été fait de distinction entre l'alimentation électrique du véhicule en marche ou à l'arrêt. Toutefois, l'augmentation de la vitesse des véhicules ferroviaires et/ou le nombre de pantographes levés simultanément d'une part, ainsi que, dans le même temps, l'augmentation des consommations électriques à l'arrêt d'autre part, créent maintenant des problèmes d'échauffement de la caténaire à l'arrêt.

En effet, les bandes de captage étaient traditionnellement réalisées en cuivre. Ce matériau convenait bien dans la mesure où, bon conducteur électrique, il s'échauffait peu et transmettait donc peu de chaleur à la caténaire. A l'arrêt, cette dernière se maintenait donc à des températures acceptables, bien que son échauffement soit alors concentré en permanence au même point.

Toutefois, le cuivre présente l'inconvénient d'un comportement médiocre au frottement, particulièrement à grande vitesse où il se révèle agressif vis-à-vis de la caténaire. Les bandes de captage en cuivre nécessitent en outre un entretien important, notamment en termes de graissage, et ont une durée de vie relativement courte.

C'est la raison pour laquelle on est actuellement amené à utiliser des bandes de captage en carbone, qui usent beaucoup moins la caténaire.

A titre d'exemple de l'état de la technique, le brevet français FR2796895 décrit un élément de contact électrique frottant en composite carbone/carbone.

Mais le carbone est moins bon conducteur électrique que le cuivre et il s'échauffe donc plus, de sorte qu'à l'arrêt il transmet plus de chaleur à la caténaire et que celle-ci atteint des températures proche de la limite admissible. Ceci est particulièrement le cas lorsque l'alimentation est à basse tension, par exemple sur les réseaux à 1500 ou 3000 volts, de sorte qu'un pantographe unique est incompatible avec une solution multi-tension.

On notera également qu'il n'est pas possible d'utiliser une bande cuivre sur une caténaire destinée uniquement à des bandes carbone, car une telle utilisation a pour effet de détruire la patine qui se forme et qui est nécessaire au bon fonctionnement du pantographe.

La présente invention vise à pallier ces inconvénients.

Plus particulièrement, l'invention a pour but de limiter l'échauffement du ou des fils de contact de la caténaire au niveau d'un pantographe porté par un véhicule à l'arrêt.

A cet effet, l'invention a pour objet un pantographe de véhicule ferroviaire selon la revendication 1.

Ainsi, on utilise à l'arrêt, ou à très faible vitesse, un dispositif de captage évitant un trop grand échauffement de la caténaire, tout en conservant les avantages des pantographes actuellement utilisés pour les véhicules à grande vitesse.

Dans un mode de réalisation particulier, lesdits moyens de montage sont disposés entre les moyens de déplacement et un arbre antibalançant de la structure du pantographe.

Egalement dans un mode de réalisation particulier, lesdits moyens de déplacement comprennent un actionneur commandable à distance, notamment un vérin pneumatique.

L'invention a également pour objet un véhicule ferroviaire, caractérisé par le fait qu'il comprend un pantographe tel que décrit ci-dessus.

On décrira maintenant, à titre d'exemple non limitatif, un mode de réalisation particulier de l'invention, en référence aux dessins schématiques annexés dans lesquels :
- la figure 1 est une vue de face d'un pantographe selon l'invention en position de marche ; et
- la figure 2 en est une vue à l'arrêt.

On voit sur les figures un pantographe dont la structure de type connu n'est pas représentée, à l'exception de l'arbre antibalançant 1 monté à l'extrémité du bras supérieur du pantographe.

L'arbre antibalançant 1 supporte, également de façon connue, l'ensemble de la tête de captage du pantographe, dont les archets de captage 2, qui sont ici équipés de bandes de captage pour grande vitesse en carbone. L'arbre antibalançant porte en outre les cornes isolantes 3.

Sur l'arbre 1 sont montés, par l'intermédiaire de ferrures non représentées, des corps 4 de vérins pneumatiques. Ces vérins sont agencés sensiblement verticalement de sorte que leur tige 5 s'étende vers le haut.

L'extrémité des tiges 5 des vérins porte une bande de captage auxiliaire 6 en cuivre, en elle-même connue.

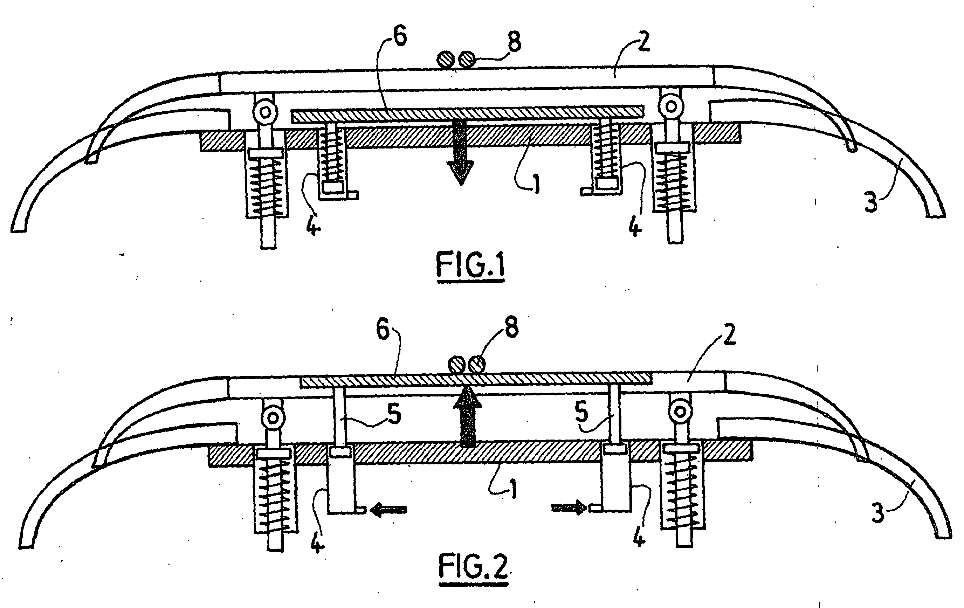

Lorsque le véhicule est en marche, les tiges des vérins sont maintenues rétractées, comme montré à la figure 1. La bande de captage auxiliaire 6 n'est alors pas en contact avec la caténaire 8.

Lorsque le véhicule est à l'arrêt, les vérins sont activés pour amener la bande de captage auxiliaire 6 au contact de la caténaire 8.

En fonction du réglage de la course des vérins par rapport aux archets 2, de la raideur des suspensions de cet archet, de l'effort d'équilibrage du pantographe, ainsi que de l'usure des bandes de captage en carbone, seule la bande de captage auxiliaire 6, ou les deux bandes de captage, sont alors en contact avec le fil de la caténaire. Toutefois, compte tenu de la différence de résistance électrique entre les bandes de captage principales et la bande de captage auxiliaire, l'essentiel du courant électrique passe par la bande auxiliaire, évitant l'échauffement des bandes principales et la transmission de la chaleur à la caténaire.

Le passage du dispositif de captage d'une position à l'autre peut être réalisé automatiquement en fonction de la vitesse du véhicule, et se faire par exemple aux environs de 3 à 5 km/h.

On prévoira de préférence un retour rapide en position de marche, avec le dispositif de captage auxiliaire rétracté, de façon à optimiser la coupure d'arc dans cette phase.

## Revendications

1. Pantographe de véhicule ferroviaire, muni d'un dispositif de captage principal (2), constitué d'un premier matériau, destiné à l'alimentation électrique du véhicule en marche, **caractérisé par le fait que** le pantographe comprend en outre un dispositif de captage auxiliaire destiné à l'alimentation électrique du véhicule à l'arrêt, ledit dispositif de captage auxiliaire comprenant une bande de captage (6) constitué d'un second matériau, comprenant des moyens de montage sur la structure du pantographe, et des moyens de déplacement (4, 5) agencés pour déplacer la bande de captage entre une position rétractée à l'écart d'une caténaire (8) située au-dessus du véhicule et une position de fonctionnement en contact avec la caténaire, le premier matériau étant moins bon conducteur électrique que le second matériau.

2. Pantographe selon la revendication 1, dans lequel lesdits moyens de montage sont disposés entre les moyens de déplacement et un arbre antibalançant (1) de la structure du pantographe.

3. Pantographe selon l'une quelconque des revendication 1 et 2, dans lequel lesdits moyens de déplacement comprennent au moins actionneur commandable à distance, notamment un vérin pneumatique.

4. Pantographe selon l'une quelconque des revendications 1 à 3, dans lequel ladite bande de captage du dispositif de captage auxiliaire est en cuivre.

5. Véhicule ferroviaire, **caractérisé par le fait qu'**il comprend un pantographe selon l'une quelconque des revendications 1 à 4.

## Claims

1. A rail vehicle pantograph equipped with a main collector device (2) that is made of a first material and that serves for electrically powering the vehicle in motion, said pantograph being **characterized by** the fact that the pantograph is further provided with an auxiliary collector device serving for electrically powering the vehicle at a standstill, said auxiliary collector device comprising a collector strip (6) that is made of a second material, that is provided with means for mounting it on the structure of the pantograph, and that is provided with displacement means (4, 5) arranged to displace the collector strip between a retracted position spaced apart from a catenary (8) situated above the vehicle and an operating position in contact with the catenary, the first material being a poorer electricity conductor than the second material.

2. A pantograph according to claim 1, in which said mounting means are disposed between the displacement means and a registration arm (1) of the pantograph structure.

3. A pantograph according to claim 1 or claim 2, in which said displacement means comprise at least one remotely-controllable actuator, in particular a pneumatic actuator.

4. A pantograph according to any one of claims 1 to 3, in which said collector strip of the auxiliary collector device is made of copper.

5. A rail vehicle **characterized by** the fact that it includes a pantograph according to any one of claims 1 to 4.

## Patentansprüche

1. Stromabnehmer für Schienenfahrzeug mit einer aus einem ersten Material bestehenden Hauptabgriffvorrichtung (2) für die Stromversorgung des fahrenden Fahrzeugs, **dadurch gekennzeichnet, dass** der Stromabnehmer ferner eine Nebenabgriffvorrichtung umfasst für die Stromversorgung des stehenden Fahrzeugs, wobei die Nebenabgriffvorrichtung ein aus einem zweiten Material bestehendes Abgriffband (6) umfasst, mit Montagemitteln an der Struktur des Stromabnehmers und Verschiebungsmitteln (4, 5), um das Abgriffband zwischen einer eingezogenen, von einer über dem Fahrzeug liegenden Fahrleitung (8) entfernten Position und einer Betriebsposition in Kontakt mit der Fahrleitung zu verschieben, wobei das erste Material schlechter elektrisch leitend ist als das zweite Material.

2. Stromabnehmer nach Anspruch 1, bei dem die Montagemittel zwischen den Verschiebungsmitteln und einer Antipendelwelle (1) der Struktur des Stromabnehmers angeordnet sind.

3. Stromabnehmer nach einem der Ansprüche 1 und 2, bei dem die Verschiebungsmittel mindestens ein fernsteuerbares Stellglied, insbesondere einen Pneumatikzylinder umfassen.

4. Stromabnehmer nach einem der Ansprüche 1 bis 3, bei dem das Abgriffband der Nebenabgriffvorrichtung aus Kupfer besteht.

5. Schienenfahrzeug, **dadurch gekennzeichnet, dass** es einen Stromabnehmer nach einem der Ansprüche 1 bis 4 umfasst.
